(19) Europäisches Patentamt
European Patent Office
Office européen des brevets

(11) **EP 4 644 517 A1**

(12) **EUROPEAN PATENT APPLICATION**
published in accordance with Art. 153(4) EPC

(43) Date of publication:
**05.11.2025 Bulletin 2025/45**

(21) Application number: **23911862.3**

(22) Date of filing: **20.12.2023**

(51) International Patent Classification (IPC):
*C12G 3/04* $^{(2019.01)}$     *C12C 5/02* $^{(2006.01)}$
*C12C 11/00* $^{(2006.01)}$     *C12C 12/00* $^{(2006.01)}$
*C12G 3/021* $^{(2019.01)}$

(52) Cooperative Patent Classification (CPC):
**C12C 5/02; C12C 11/00; C12C 12/00; C12G 3/021;
C12G 3/04**

(86) International application number:
**PCT/JP2023/045604**

(87) International publication number:
**WO 2024/143082 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 JP 2022208261**

(71) Applicant: **Suntory Holdings Limited
Osaka-shi, Osaka 530-8203 (JP)**

(72) Inventor: **YOSHII Takaaki
Kawasaki-shi, Kanagawa 211-0067 (JP)**

(74) Representative: **Vossius & Partner
Patentanwälte Rechtsanwälte mbB
Siebertstrasse 3
81675 München (DE)**

(54) **BEER-FLAVORED BEVERAGE**

(57) Provided is a beer-flavored beverage having an alcohol percentage of 10.0 (v/v)% or greater and a real extract concentration of 11.8 (w/w)% or greater.

**Description**

Technical Field

The present invention relates to a beer-taste beverage and a method for producing a beer-taste beverage.

Background Art

In the known art, various beer-taste beverages have been developed and distributed to the market in response to recent diversified preferences of consumers.

For example, Patent Document 1 discloses a high-alcohol beer-taste beverage containing citric acid and phenethyl alcohol, in which the content of citric acid is greater than or equal to 270 mg/L and less than or equal to 1100 mg/L, and the content of phenethyl alcohol is greater than or equal to 40 mg/L and less than or equal to 180 mg/L.

Citation List

Patent Document

Patent Document 1: JP 2021-159020 A

Summary of Invention

Technical Problem

A beer-taste beverage having a high alcohol content has tended to have strong unsuitable bitterness and an insufficient body. Under such a circumstance, there is a demand for a high-alcohol beer-taste beverage that suppresses unsuitable bitterness and has a desirable body.

Solution to Problem

The present invention provides a beer-taste beverage having an alcohol content and a real extract concentration of greater than or equal to predetermined values. Specifically, the present invention provides, for example, the following aspects [1] to [8].

[1] A beer-taste beverage, having

an alcohol content of greater than or equal to 10.0 (v/v)%, and
a real extract concentration of greater than or equal to 11.8 (w/w)%.

[2] The beer-taste beverage according to [1] above, wherein a protein content is greater than or equal to 1.0 mg/mL.
[3] The beer-taste beverage according to [1] or [2] above, wherein [the real extract concentration/the alcohol content], a ratio of the real extract concentration (unit: (w/w)%) to the alcohol content (unit: (v/v)%), is greater than or equal to 0.10 and less than or equal to 5.00.
[4] The beer-taste beverage according to any one of [1] to [3] above, wherein the alcohol content is greater than or equal to 15.0 (v/v)% and less than or equal to 30.0 (v/v)%.
[5] The beer-taste beverage according to any one of [1] to [4] above, wherein the real extract concentration is greater than or equal to 14.0 (w/w)% and less than or equal to 25.0 (w/w)%.
[6] The beer-taste beverage according to any one of [1] to [5] above, wherein [a protein content/the alcohol content], a ratio of a protein content (unit: mg/mL) to the alcohol content (unit: (v/v)%), is greater than or equal to 0.050 and less than or equal to 5.0.
[7] The beer-taste beverage according to any one of [1] to [6] above, wherein [a protein content/the real extract concentration], a ratio of a protein content (unit: mg/mL) to the real extract concentration (unit: (w/w)%), is greater than or equal to 0.050 and less than or equal to 5.0.
[8] A method for producing a beer-taste beverage, the method including at least the following steps (a) and (b):

· step (a): adjusting an alcohol content of the beer-taste beverage to greater than or equal to 10.0 (v/v)%; and
· step (b): adjusting a real extract concentration of the beer-taste beverage to greater than or equal to 11.8 (w/w)%.

Advantageous Effects of Invention

A beer-taste beverage according to a preferred aspect of the present invention, provides, for example, a beer-taste beverage having suppressed unsuitable bitterness and a desirable body.

Description of Embodiments

1. Beer-taste beverage

As used herein, the term "beer-taste beverage" refers to an alcohol-containing carbonated beverage with a beer-like flavor. That is, unless otherwise specified, the beer-taste beverage as used herein encompasses any carbonated beverage with a flavor of beer.

Thus, for example, the "beer-taste beverage" includes not only beer and fermented beer-taste beverages, which are malt-fermented beverages produced by fermenting malt, hops, and water as raw materials with yeast, but also carbonated beverages to which a beer flavoring containing a flavor component such as an ester, a higher alcohol, or lactone is added.

In addition, the beer-taste beverage according to an aspect of the present invention may be a fermented beer-taste beverage that has undergone a fermentation process using yeast or may be a non-fermented alcohol-containing beer-taste beverage that has not undergone a fermentation process and to which spirits (distilled liquor) or the like are added.

The fermented beer-taste beverage may be a top-fermented beer-taste beverage (ale beer-taste beverage) brewed through a fermentation process using a top-fermenting yeast (e.g., Saccharomyces), a bottom-fermented beer-taste beverage such as a lager beer-taste beverage or a pilsner beer-taste beverage brewed through a fermentation process using a bottom-fermenting yeast (e.g., Saccharomyces), or may be a beer-taste beverage produced by mixing the top-fermented beer-taste beverage and the bottom-fermented beer-taste beverage. The term "fermentation" as used herein may be alcoholic fermentation that produces alcohol, or may be non-alcoholic fermentation that does not produce alcohol. In the case of non-alcoholic fermentation, the beer-taste beverage according to an aspect of the present invention can be prepared by adding spirits (distilled liquor) or the like.

In addition, the beer-taste beverage of an aspect of the present invention may be a malt-containing beer-taste beverage using malt as a raw material, or may be a malt-free beer-taste beverage not using malt. Examples of the malt-containing beer-taste beverage include barley malt-containing beer-taste beverages.

The beer-taste beverage according to an aspect of the present invention has an alcohol content (ethanol content) of greater than or equal to 10.0 (v/v)%. In the present specification, the "high-alcohol beer-taste beverage" refers to a beer-taste beverage having an alcohol content of greater than or equal to 10.0 (v/v)%.

The alcohol content (ethanol content) of the beer-taste beverage according to an aspect of the present invention is greater than or equal to 10.0 (v/v)%. The alcohol content may be greater than or equal to 10.5 (v/v)%, greater than or equal to 11.0 (v/v)%, greater than or equal to 11.5 (v/v)%, greater than or equal to 12.0 (v/v)%, greater than or equal to 12.5 (v/v)%, greater than or equal to 13.0 (v/v)%, greater than or equal to 13.5 (v/v)%, greater than or equal to 14.0 (v/v)%, greater than or equal to 14.5 (v/v)%, greater than or equal to 15.0 (v/v)%, greater than or equal to 15.5 (v/v)%, greater than or equal to 16.0 (v/v)%, greater than or equal to 16.5 (v/v)%, greater than or equal to 17.0 (v/v)%, greater than or equal to 17.5 (v/v)%, greater than or equal to 18.0 (v/v)%, greater than or equal to 18.5 (v/v)%, greater than or equal to 19.0 (v/v)%, greater than or equal to 19.5 (v/v)%, greater than or equal to 20.0 (v/v)%, greater than or equal to 21.0 (v/v)%, greater than or equal to 22.0 (v/v)%, greater than or equal to 23.0 (v/v)%, greater than or equal to 24.0 (v/v)%, greater than or equal to 25.0 (v/v)%, greater than or equal to 26.0 (v/v)%, greater than or equal to 27.0 (v/v)%, greater than or equal to 28.0 (v/v)%, greater than or equal to 29.0 (v/v)%, or greater than or equal to 30.0 (v/v)%, and may be less than or equal to 50.0 (v/v)%, less than or equal to 47.0 (v/v)%, less than or equal to 45.0 (v/v)%, less than or equal to 43.0 (v/v)%, less than or equal to 40.0 (v/v)%, less than or equal to 37.0 (v/v)%, less than or equal to 35.0 (v/v)%, less than or equal to 33.0 (v/v)%, less than or equal to 30.0 (v/v)%, less than or equal to 29.0 (v/v)%, less than or equal to 28.0 (v/v)%, less than or equal to 27.0 (v/v)%, less than or equal to 26.0 (v/v)%, less than or equal to 25.0 (v/v)%, less than or equal to 24.0 (v/v)%, less than or equal to 23.0 (v/v)%, less than or equal to 22.0 (v/v)%, less than or equal to 21.0 (v/v)%, or less than or equal to 20.0 (v/v)%.

Note that, as used herein, the alcohol content is indicated as a percentage ((v/v)%) based on volume/volume. A content of alcohol in a beverage can be measured by any known method and can be measured, for example, with a vibrating densimeter.

The alcohol content of the beer-taste beverage according to an aspect of the present invention can be adjusted to a desired range by appropriately setting the types of ingredients (such as barley and/or wheat, malt, corn grits, and sugar solution), the amounts of ingredients, the type of enzyme, the amount of enzyme added, the timing of enzyme addition, the saccharification time in a preparation tank, the protein decomposition time in the preparation tank, the pH in the preparation tank, the pH in a preparation process (wort production step from feeding of malt until before addition of yeast), the amount of the acid to be added used in the pH adjustment, the timing of the pH adjustment (such as at the time of preparation, fermentation. or completion of fermentation, before beer filtration, and after beer filtration), the set temperature and holding time in each temperature region in preparation of wort (including during saccharification), the original extract concentration in a pre-fermentation liquid, the original extract concentration in the fermentation process, the fermentation conditions (such as the oxygen concentration, aeration conditions, yeast species, amount of yeast added, the number of yeast grown, the removal timing of yeast, fermentation temperature, fermentation time, pressure setting, and carbon dioxide concentration), presence or absence of addition of spirits, a distilled alcohol or the like, the addition amount in the case of addition, and the like.

The beer-taste beverage according to an aspect of the present invention may contain spirits (distilled liquor) derived from grain as an alcohol component to adjust the alcohol content to the range described above.

In the present specification, the term "spirits" means an alcoholic beverage produced by saccharifying grain, such as barley and/or wheat, rice, buckwheat, corn, potato, or sugar cane, as a raw material using malt or, as necessary, an enzymatic agent, fermenting the saccharified product using yeast, and then distilling the fermented product. As the grain which is an ingredient of the spirits, a plant belonging to the family Gramineae is preferable, and barley and/or wheat is more preferable.

Meanwhile, a high-alcohol beer-taste beverage tends to have strong unsuitable bitterness and an insufficient body. For such a problem specific to a high-alcohol beer-taste beverage, the beer-taste beverage according to an aspect of the present invention is a high-alcohol beer-taste beverage having a suppressed unsuitable bitterness and a desirable body, by adjusting a real extract concentration.

In the beer-taste beverage of an aspect of the present invention, the real extract concentration is greater than or equal to 11.8 mass%. The real extract concentration may be greater than or equal to 12.0 (w/w)%, greater than or equal to 12.3 (w/w)%, greater than or equal to 12.5 (w/w)%, greater than or equal to 12.8 (w/w)%, greater than or equal to 13.0 (w/w)%, greater than or equal to 13.3 (w/w)%, greater than or equal to 13.5 (w/w)%, greater than or equal to 13.8 (w/w)%, greater than or equal to 14.0 (w/w)%, greater than or equal to 14.3 (w/w)%, greater than or equal to 14.5 (w/w)%, greater than or equal to 14.8 (w/w)%, greater than or equal to 15.0 (w/w)%, greater than or equal to 15.3 (w/w)%, greater than or equal to 15.5 (w/w)%, greater than or equal to 15.8 (w/w)%, greater than or equal to 16.0 (w/w)%, greater than or equal to 16.3 (w/w)%, greater than or equal to 16.5 (w/w)%, greater than or equal to 16.8 (w/w)%, greater than or equal to 17.0 (w/w)%, greater than or equal to 17.3 (w/w)%, greater than or equal to 17.5 (w/w)%, greater than or equal to 17.8 (w/w)%, greater than or equal to 18.0 (w/w)%, greater than or equal to 18.3 (w/w)%, greater than or equal to 18.5 (w/w)%, greater than or equal to 18.8 (w/w)%, greater than or equal to 19.0 (w/w)%, greater than or equal to 19.3 (w/w)%, greater than or equal to 19.5 (w/w)%, greater than or equal to 19.8 (w/w)%, greater than or equal to 20.0 (w/w)%, greater than or equal to 20.3 (w/w)%, greater than or equal to 20.5 (w/w)%, greater than or equal to 20.8 (w/w)%, or greater than or equal to 21.0 (w/w)%, and may be less than or equal to 40.0 (w/w)%, less than or equal to 37.0 (w/w)%, less than or equal to 35.0 (w/w)%, less than or equal to 32.0 (w/w)%, less than or equal to 30.0 (w/w)%, less than or equal to 29.0 (w/w)%, less than or equal to 28.0 (w/w)%, less than or equal to 27.0 (w/w)%, less than or equal to 26.0 (w/w)%, less than or equal to 25.0 (w/w)%, less than or equal to 24.0 (w/w)%, less than or equal to 23.0 (w/w)%, less than or equal to 22.0 (w/w)%, less than or equal to 21.0 (w/w)%, less than or equal to 20.0 (w/w)%, less than or equal to 19.8 (w/w)%, less than or equal to 19.5 (w/w)%, less than or equal to 19.3 (w/w)%, less than or equal to 19.0 (w/w)%, less than or equal to 18.8 (w/w)%, less than or equal to 18.5 (w/w)%, less than or equal to 18.3 (w/w)%, less than or equal to 18.0 (w/w)%, less than or equal to 17.8 (w/w)%, less than or equal to 17.5 (w/w)%, less than or equal to 17.3 (w/w)%, less than or equal to 17.0 (w/w)%, less than or equal to 16.8 (w/w)%, less than or equal to 16.5 (w/w)%, less than or equal to 16.3 (w/w)%, less than or equal to 16.0 (w/w)%, less than or equal to 15.8 (w/w)%, less than or equal to 15.5 (w/w)%, less than or equal to 15.3 (w/w)%, less than or equal to 15.0 (w/w)%, less than or equal to 14.8 (w/w)%, less than or equal to 14.5 (w/w)%, less than or equal to 14.3 (w/w)%, less than or equal to 14.0 (w/w)%, less than or equal to 13.8 (w/w)%, less than or equal to 13.5 (w/w)%, less than or equal to 13.3 (w/w)%, less than or equal to 13.0 (w/w)%, less than or equal to 12.8 (w/w)%, less than or equal to 12.5 (w/w)%, less than or equal to 12.3 (w/w)%, or less than or equal to 12.0 (w/w)%.

Note that the real extract concentration can be measured in accordance with "8.4.3 Alcolyzer method" in Revised BCOJ Beer Analysis Method, Enlarged and Revised Edition of 2013 (edited by [Analysis Committee] Brewery Convention of Japan, Brewers Association of Japan, published by Public Interest Incorporated Foundation, The Brewing Society of Japan)".

The real extract concentration can be adjusted by appropriately setting the addition of dilution water or carbonated water, the types of ingredients (such as malt, corn grits, and sugar solution), the pulverized grain size of malt, the pulverization mode of malt (such as wet pulverization and dry pulverization), the humidity at the time of pulverization of malt (extent of humidity adjustment), the temperature at the time of pulverization of malt, the type of mill used at the time of pulverization of malt, the amounts of ingredients, the type of enzyme, the amount of enzyme added, the timing of enzyme addition, the enzyme decomposition time, the saccharification time in a preparation tank, the time for proteolysis in the preparation tank, the pH in the preparation tank, the pH in a preparation process (wort production step from feeding of malt until before addition of yeast), the amount of the acid to be added used in the pH adjustment, the timing of the pH adjustment (such as at the time of preparation, fermentation. or completion of fermentation, before beer filtration, and after beer filtration), the set temperature and holding time in each temperature region in preparation of wort (including during saccharification), the wort filtration time, the temperature during the wort filtration, the pH during the wort filtration, the wort collection amount in the wort filtration, the amount of sparging water during the wort filtration, the pH of sparging water during the wort filtration, the temperature of sparging water during the wort filtration, the fermentation conditions (such as the oxygen concentration, aeration conditions, yeast species, amount of yeast added, the number of yeast grown, the removal timing of yeast, fermentation temperature, fermentation time, pressure setting, and carbon dioxide concentration), the addition of spirits, a distilled alcohol or the like, and the like.

In the beer-taste beverage according to an aspect of the present invention, from the viewpoint of obtaining a high-alcohol beer-taste beverage excellent in balance between a suppression effect of uncomfortable bitterness and a desirable body while having an appropriate feeling of stimulation of alcohol, a ratio of the real extract concentration (unit: (w/w)%) to the alcohol content (unit: (v/v)%) [real extract concentration/alcohol content] is preferably greater than or equal to 0.10, greater than or equal to 0.15, greater than or equal to 0.20, greater than or equal to 0.25, greater than or equal to 0.30, greater than or equal to 0.32, greater than or equal to 0.35, greater than or equal to 0.37, greater than or equal to 0.40, greater than or equal to 0.42, greater than or equal to 0.45, greater than or equal to 0.47, greater than or equal to 0.50, greater than or equal to 0.52, greater than or equal to 0.55, greater than or equal to 0.57, greater than or equal to 0.60, greater than or equal to 0.62, greater than or equal to 0.65, greater than or equal to 0.67, greater than or equal to 0.70, greater than or equal to 0.72, greater than or equal to 0.75, greater than or equal to 0.77, greater than or equal to 0.80, greater than or equal to 0.82, greater than or equal to 0.85, or greater than or equal to 0.87, and may be greater than or equal to 1.00, greater than or equal to 1.10, greater than or equal to 1.20, greater than or equal to 1.30, greater than or equal to 1.40, greater than or equal to 1.50, greater than or equal to 1.60, greater than or equal to 1.70, greater than or equal to 1.80, greater than or equal to 1.90, greater than or equal to 2.00, greater than or equal to 2.10, or greater than or equal to 2.20. From the viewpoint of obtaining a high-alcohol beer-taste beverage excellent in balance between a suppression effect of uncomfortable bitterness and a desirable body while having an appropriate feeling of stimulation of alcohol, in the beer-taste beverage according to an aspect of the present invention, the ratio of the real extract concentration (unit: (w/w)%) to the alcohol content (unit: (v/v)%) [real extract concentration/alcohol content] is preferably less than or equal to 5.00, less than or equal to 4.50, less than or equal to 4.00, less than or equal to 3.50, less than or equal to 3.00, less than or equal to 2.80, less than or equal to 2.50, less than or equal to 2.30, less than or equal to 2.00, less than or equal to 1.90, less than or equal to 1.80, less than or equal to 1.70, less than or equal to 1.60, less than or equal to 1.50, less than or equal to 1.40, less than or equal to 1.30, less than or equal to 1.20, less than or equal to 1.10, or less than or equal to 1.00, and may be less than or equal to 0.90, less than or equal to 0.80, less than or equal to 0.70, less than or equal to 0.60, less than or equal to 0.50, less than or equal to 0.40, less than or equal to 0.30, less than or equal to 0.20, or less than or equal to 0.10.

In the beer-taste beverage according to an aspect of the present invention, from the viewpoint of obtaining a high-alcohol beer-taste beverage having a further improved drinking sensation, the protein content is preferably greater than or equal to 0.5 mg/mL, greater than or equal to 1.0 mg/mL, greater than or equal to 1.5 mg/mL, greater than or equal to 2.0 mg/mL, greater than or equal to 2.5 mg/mL, greater than or equal to 3.0 mg/mL, greater than or equal to 3.5 mg/mL, greater than or equal to 4.0 mg/mL, greater than or equal to 4.5 mg/mL, greater than or equal to 5.0 mg/mL greater than or equal to, 5.5 mg/mL, greater than or equal to 6.0 mg/mL, greater than or equal to 6.5 mg/mL, greater than or equal to 7.0 mg/mL, greater than or equal to 7.5 mg/mL, greater than or equal to 8.0 mg/mL, greater than or equal to 8.5 mg/mL, greater than or equal to 9.0 mg/mL, greater than or equal to 9.5 mg/mL, greater than or equal to 10.0 mg/mL, greater than or equal to 10.5 mg/mL, greater than or equal to 11.0 mg/mL, greater than or equal to 11.5 mg/mL, greater than or equal to 12.0 mg/mL, greater than or equal to 12.5 mg/mL, greater than or equal to 13.0 mg/mL, greater than or equal to 13.5 mg/mL, greater than or equal to 14.0 mg/mL, greater than or equal to 14.5 mg/mL, or greater than or equal to 15.0 mg/mL, and may be greater than or equal to 15.5 mg/mL, greater than or equal to 16.0 mg/mL, greater than or equal to 16.5 mg/mL, greater than or equal to 17.0 mg/mL, greater than or equal to 17.5 mg/mL, greater than or equal to 18.0 mg/mL, greater than or equal to 18.5 mg/mL, greater than or equal to 19.0 mg/mL, greater than or equal to 19.5 mg/mL, greater than or equal to 20.0 mg/mL, greater than or equal to 20.5 mg/mL, greater than or equal to 21.0 mg/mL, greater than or equal to 21.5 mg/mL, greater than or equal to 22.0 mg/mL, greater than or equal to 22.5 mg/mL, greater than or equal to 23.0 mg/mL, greater than or equal to 23.5 mg/mL, greater than or equal to 24.0 mg/mL, greater than or equal to 24.5 mg/mL, greater than or equal to 25.0 mg/mL, greater than or equal to 25.5 mg/mL, greater than or equal to 26.0 mg/mL, greater than or equal to 26.5 mg/mL, greater than or equal to 27.0 mg/mL, greater than or equal to 27.5 mg/mL, greater than or equal to 28.0 mg/mL, greater than or equal to 28.5 mg/mL, greater than or equal to 29.0 mg/mL, greater than or equal to 29.5 mg/mL, greater than or equal to 30.0 mg/mL, greater than or equal to 30.5 mg/mL, or greater than or equal to 31.0 mg/mL. In the beer-taste beverage according to an aspect of the present invention, from the viewpoint of obtaining a high-alcohol beer-taste beverage having a further improved drinking sensation, the protein content is preferably less than or equal to 100.0 mg/mL, less than or equal to 90.0 mg/mL, less than or equal to 80.0 mg/mL, less than or equal to 70.0 mg/mL, less than or equal to 60.0 mg/mL, less than or equal to 50.0 mg/mL, less than or equal to 47.0 mg/mL, less than or equal to 45.0 mg/mL, less than or equal to 42.0 mg/mL, less than or equal to 40.0 mg/mL, less than or equal to 37.0 mg/mL, less than or equal to 35.0 mg/mL, less than or equal to 32.0 mg/mL, less than or equal to 30.0 mg/mL, less than or equal to 29.5 mg/mL, less than or equal to 29.0 mg/mL, less than or equal to 28.5 mg/mL, less than or equal to 28.0 mg/mL, less than or equal to 27.5 mg/mL, less than or equal to 27.0 mg/mL, less than or equal to 26.5 mg/mL, less than or equal to 26.0 mg/mL, less than or equal to 25.5 mg/mL, less than or equal to 25.0 mg/mL, less than or equal to 24.5 mg/mL, less than or equal to 24.0 mg/mL, less than or equal to 23.5 mg/mL, less than or equal to 23.0 mg/mL, less than or equal to 22.5 mg/mL, less than or equal to 22.0 mg/mL, less than or equal to 21.5 mg/mL, less than or equal to 21.0 mg/mL, less than or equal to 20.5 mg/mL, or less than or equal to 20.0 mg/mL, and may be less than or equal to 19.5 mg/mL, less than or equal to 19.0 mg/mL, less than or equal to 18.5 mg/mL, less than or equal to 18.0 mg/mL, less than or equal to 17.5 mg/mL, less than or equal to 17.0 mg/mL, less than or equal to 16.5 mg/mL, less than or equal to 16.0 mg/mL, less than or equal to 15.5 mg/mL, less than or equal to 15.0 mg/mL, less than or equal to 14.5 mg/mL, less than or equal to 14.0 mg/mL, less than or equal to 13.5 mg/mL, less than or equal to 13.0 mg/mL, less than or equal to 12.5 mg/mL, less than or equal to 12.0 mg/mL, less than or equal to 11.5 mg/mL, less than or equal to 11.0 mg/mL, less than or equal to 10.5 mg/mL, less than or equal to 10.0 mg/mL, less than or equal to 9.5 mg/mL, less than or equal to 9.0 mg/mL, less than or equal to 8.5 mg/mL, less than or equal to 8.0 mg/mL, less than or equal to 7.5 mg/mL, less than or equal to 7.0 mg/mL, less than or equal to 6.5 mg/mL, less than or equal to 6.0 mg/mL, less than or equal to 5.5 mg/mL, less than or equal to 5.0 mg/mL, less than or equal to 4.5 mg/mL, less than or equal to 4.0 mg/mL, less than or equal to 3.5 mg/mL, less than or equal to 3.0 mg/mL, less than or equal to 2.5 mg/mL, less than or equal to 2.0 mg/mL, less than or equal to 1.5 mg/mL, or less than or equal to 1.0 mg/mL.

Note that the protein content can be calculated by multiplying a total nitrogen amount by a protein conversion factor of 6.25. The total nitrogen amount can be measured by a method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition, 2013).

The protein content can be controlled by adjusting the use amount of an ingredient that has a relatively high nitrogen content and can be assimilated by yeast. Specifically, the protein content can be increased by increasing the use amount of a raw material having a high nitrogen content.

Examples of the raw material having a high nitrogen content include malt of grains and ungerminated grains such as barley, wheat (wheat protein), rye, common wild oat, oat, adlay, corn, soybean (soybean protein), and pea (pea protein), yeast extract, collagen, collagen peptides, vegetables, fruits, buckwheat, sesame, fermented bean paste, tea, persimmon, kelp, brown seaweed, and Dried Bonito Flakes.

The protein content can be adjusted by, in addition to the amounts and the selection of types of the ingredients used, appropriately setting the type of enzyme, the amount of enzyme added (also including a proteolytic enzyme), the timing of enzyme addition, the time for proteolysis in a preparation tank, the pH in the preparation tank, the pH in the preparation process (wort production step from feeding of malt until before addition of yeast), the time for wort filtration, the set temperature and holding time in each temperature region in preparation of wort, the boiling time and pH in the boiling treatment, the original extract concentration in the pre-fermentation liquid, the original extract concentration in the fermentation process, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

From the viewpoint of obtaining a high-alcohol beer-taste beverage having a further improved drinking sensation while having an appropriate feeling of stimulation of alcohol, in the beer-taste beverage according to an aspect of the present invention, a ratio of the protein content (unit: mg/mL) to the alcohol content (unit: (v/v)%) [protein content/alcohol content] is preferably greater than or equal to 0.050, greater than or equal to 0.070, greater than or equal to 0.10, greater than or equal to 0.15, greater than or equal to 0.20, greater than or equal to 0.25, greater than or equal to 0.30, greater than or equal to 0.35, greater than or equal to 0.40, greater than or equal to 0.45, greater than or equal to 0.50, greater than or equal to 0.55, greater than or equal to 0.60, greater than or equal to 0.65, greater than or equal to 0.70, greater than or equal to 0.75, or greater than or equal to 0.80, and may be greater than or equal to 0.90, greater than or equal to 1.0, greater than or equal to 1.1, greater than or equal to 1.2, greater than or equal to 1.3, greater than or equal to 1.4, greater than or equal to 1.5, greater than or equal to 1.6, or greater than or equal to 1.7. From the viewpoint of obtaining a high-alcohol beer-taste beverage having a further improved drinking sensation while having an appropriate feeling of stimulation of alcohol, in the beer-taste beverage of an aspect of the present invention, the ratio of the protein content (unit: mg/mL) to the alcohol content (unit: (v/v)%) [protein content/alcohol content] is preferably less than or equal to 5.0, less than or equal to 4.5, less than or equal to 4.0, less than or equal to 3.5, less than or equal to 3.0, less than or equal to 2.5, less than or equal to 2.2, less than or equal to 2.0, less than or equal to 1.9, less than or equal to 1.8, less than or equal to 1.7, less than or equal to 1.6, less than or equal to 1.5, less than or equal to 1.4, less than or equal to 1.3, less than or equal to 1.2, or less than or equal to 1.1, and may be less than or equal to 1.0, less than or equal to 0.90, less than or equal to 0.80, less than or equal to 0.70, less than or equal to 0.60, less than or equal to 0.50, less than or equal to 0.40, less than or equal to 0.30, less than or equal to 0.20, less than or equal to 0.10, less than or equal to 0.08, or less than or equal to 0.06.

From the viewpoint of obtaining a high-alcohol beer-taste beverage excellent in balance between a suppression effect of uncomfortable bitterness and a desirable body and having a further improved drinking sensation, in the beer-taste beverage of an aspect of the present invention, a ratio of the protein content (unit: mg/mL) to the real extract concentration (unit: (w/w)%) [protein content/real extract concentration] is preferably greater than or equal to 0.050, greater than or equal to 0.060, greater than or equal to 0.070, greater than or equal to 0.10, greater than or equal to 0.15, greater than or equal to 0.20, greater than or equal to 0.25, greater than or equal to 0.30, greater than or equal to 0.35, greater than or equal to 0.40, greater than or equal to 0.45, greater than or equal to 0.50, greater than or equal to 0.55, greater than or equal to 0.60, greater than or equal to 0.65, greater than or equal to 0.70, greater than or equal to 0.75, greater than or equal to 0.80, greater than or equal to 0.85, greater than or equal to 0.90, or greater than or equal to 0.92, and may be greater than or equal to 0.95, greater than or equal to 1.0, greater than or equal to 1.1, greater than or equal to 1.2, greater than or equal to 1.3, greater than or equal to 1.4, greater than or equal to 1.5, greater than or equal to 1.6, greater than or equal to 1.7, greater than or equal to 1.9, or greater than or equal to 2.0. From the viewpoint of obtaining a high-alcohol beer-taste beverage excellent in balance between a suppression effect of uncomfortable bitterness and a desirable body and having a further improved drinking sensation, in the beer-taste beverage of an aspect of the present invention, the ratio of the protein content (unit: mg/mL) to the real extract concentration (unit: (w/w)%) [protein content/real extract concentration] is preferably less than or equal to 5.0, less than or equal to 4.5, less than or equal to 4.0, less than or equal to 3.5, less than or equal to, 3.0, less than or equal to 2.7, less than or equal to 2.5, less than or equal to 2.4, less than or equal to 2.3, less than or equal to 2.2, less than or equal to 2.1, less than or equal to 2.0, less than or equal to 1.9, less than or equal to 1.8, less than or equal to 1.7, less than or equal to 1.6, less than or equal to 1.5, less than or equal to 1.4, or less than or equal to 1.3, and may be less than or equal to 1.2, less than or equal to 1.1, less than or equal to 1.0, less than or equal to 0.90, less than or equal to 0.80, less than or equal to 0.70, less than or equal to 0.60, less than or equal to 0.50, less than or equal to 0.40, less than or equal to 0.30, less than or equal to 0.20, less than or equal to 0.10, less than or equal to 0.08, or less than or equal to 0.06.

In the beer-taste beverage according to an aspect of the present invention, from the viewpoint of obtaining a high-alcohol beer-taste beverage having a suitable tight feeling, a bitterness unit may be greater than or equal to 1.0 BUs, greater than or equal to 2.0 BUs, greater than or equal to 3.0 BUs, greater than or equal to 5.0 BUs, greater than or equal to 7.0 BUs, greater than or equal to 10.0 BUs, greater than or equal to 12.0 BUs, greater than or equal to 15.0 BUs, greater than or equal to 17.0 BUs, greater than or equal to 20.0 BUs, greater than or equal to 22.0 BUs, greater than or equal to 25.0 BUs, greater than or equal to 27.0 BUs, greater than or equal to 30.0 BUs, greater than or equal to 32.0 BUs, greater than or equal to 35.0 BUs, greater than or equal to 37.0 BUs, or greater than or equal to 40.0 BUs, and may be less than or equal to 500 BUs, less than or equal to 450 BUs, less than or equal to 400 BUs, less than or equal to 350 BUs, less than or equal to 300 BUs, less than or equal to 270 BUs, less than or equal to 250 BUs, less than or equal to 220 BUs, less than or equal to 200 BUs, less than or equal to 190 BUs, less than or equal to 180 BUs, less than or equal to 170 BUs, less than or equal to 160 BUs, less than or equal to 150 BUs, less than or equal to 140 BUs, less than or equal to 130 BUs, less than or equal to 120 BUs, less than or equal to 110 BUs, less than or equal to 100 BUs, less than or equal to 95 BUs, or less than or equal to 90 BUs.

In addition, in a case where the beer-taste beverage according to an aspect of the present invention does not use hop as a raw material, the bitterness unit may be less than 7.0 BUs, less than 6.0 BUs, less than 5.0 BUs, less than 4.0 BUs, less than 3.0 BUs, less than 2.0 BUs, less than 1.0 BUs, less than 0.5 BUs, or less than 0.1 BUs.

In the present specification, the term "bitterness unit" of the beverage can be measured by the measurement method described in "8.15 Bitterness Unit" in Revised BCOJ Beer Analysis Method (published by Public Interest Incorporated Foundation, The Brewing Society of Japan, edited by Analysis Committee, Brewery Convention of Japan, Brewers Association of Japan, Enlarged and Revised Edition of 2013).

The bitterness unit of the beer-taste beverage according to an aspect of the present invention is an index of the bitterness imparted by a hop-derived component containing isohumulone as a main component, and can be controlled by, for example, appropriately adjusting the type, amount, and addition timing of hops.

In the beer-taste beverage according to an aspect of the present invention, a sugar content may be greater than or equal to 0.5 g/100 mL, greater than or equal to 0.6 g/100 mL, greater than or equal to 0.7 g/100 mL, greater than or equal to 0.8 g/100 mL, greater than or equal to 0.9 g/100 mL, greater than or equal to 1.0 g/100 mL, greater than or equal to 1.1 g/100 mL, greater than or equal to 1.2 g/100 mL, greater than or equal to 1.3 g/100 mL, greater than or equal to 1.4 g/100 mL, greater than or equal to 1.5 g/100 mL, greater than or equal to 1.6 g/100 mL, greater than or equal to 1.7 g/100 mL, greater than or equal to 1.8 g/100 mL, greater than or equal to 1.9 g/100 mL, or greater than or equal to 2.0 g/100 mL, and may be less than or equal to 5.0 g/100 mL, less than or equal to 4.7 g/100 mL, less than or equal to 4.5 g/100 mL, less than or equal to 4.2 g/100 mL, less than or equal to 4.0 g/100 mL, less than or equal to 3.9 g/100 mL, less than or equal to 3.8 g/100 mL, less than or equal to 3.7 g/100 mL, less than or equal to 3.6 g/100 mL, less than or equal to 3.5 g/100 mL, less than or equal to 3.4 g/100 mL, less than or equal to 3.3 g/100 mL, less than or equal to 3.2 g/100 mL, less than or equal to 3.1 g/100 mL, or less than or equal to 3.0 g/100 mL.

Note that the sugar content can be adjusted by appropriately setting the addition of dilution water or carbonated water, the types of ingredients (such as malt, corn grits, and sugar solution), the amounts of ingredients, the type of enzyme, the amount of enzyme added (also including a saccharolytic enzyme or an isomerase), the timing of enzyme addition, the saccharification time, the pH during saccharification, the pH in the preparation process (wort production step from feeding of malt until before addition of yeast), the time for wort filtration, the set temperature and holding time in each temperature region in preparation of wort (including during saccharification), the original extract concentration in the pre-fermentation liquid, the original extract concentration in the fermentation process, the fermentation conditions (such as the oxygen concentration, aeration conditions, yeast species, amount of yeast added, the number of yeast grown, removal timing of yeast, fermentation temperature, fermentation time, pressure setting, carbon dioxide concentration, amount of enzyme added, type of enzyme, and timing for adding enzyme), and the like.

In addition, the "sugar" in the present specification refers to a sugar based on the Nutrition Labeling Standards for Foods (Ministry of Health, Labour and Welfare Notification No. 176, 2003, Consumer Affairs Agency Notification No. 8, partially revised on September 27, 2013) and specifically means a material in which protein, lipid, dietary fiber, ash, alcohol content, and water have been removed from the target food. Thus, the amount of sugar in a food can be calculated by subtracting the amounts of protein, lipid, dietary fiber, ash, and water from the weight of the food.

Here, the amounts of protein, lipid, dietary fiber, ash, and water can be measured by the methods described in the Nutrition Labeling Standards. Specifically, the amount of protein can be measured by a method of quantitative conversion of nitrogen, the amount of lipid can be measured by an ether extraction method, the amount of dietary fiber can be measured by the Prosky method, the amount of ash can be measured by a direct ashing method, and the amount of water can be measured by a method of heating and drying under reduced pressure.

In the beer-taste beverage according to an aspect of the present invention, an apparent fermentation degree may be greater than or equal to 56%, greater than or equal to 58%, greater than or equal to 60%, greater than or equal to 62%, greater than or equal to 65%, greater than or equal to 67%, greater than or equal to 70%, greater than or equal to 72%, greater than or equal to 75%, greater than or equal to 77%, greater than or equal to 80%, greater than or equal to 82%, greater than or equal to 85%, greater than or equal to 87%, greater than or equal to 90%, greater than or equal to 92%, greater than or equal to 95%, greater than or equal to 97%, greater than or equal to 100%, or greater than or equal to 105%, and may be less than or equal to 120%, less than or equal to 119%, less than or equal to 118%, less than or equal to 117%, less than or equal to 116%, less than or equal to 115%, less than or equal to 114%, less than or equal to 113%, less than or equal to 112%, less than or equal to 111%, or less than or equal to 110%.

Note that the apparent fermentation degree can be adjusted by appropriately setting the addition of dilution water or carbonated water, the types of ingredients (such as malt, corn grits, and sugar solution), the amounts of ingredients, the type of enzyme, the amount of enzyme added (also including a saccharolytic enzyme or an isomerase), the temperature in enzymatic reaction, the timing of enzyme addition, the saccharification time, the pH during saccharification, the temperature during saccharification, the pH in the preparation process (wort production step from feeding of malt until before addition of yeast), the temperature in the preparation process, the time for wort filtration, the set temperature and holding time in each temperature region in preparation of wort (including during saccharification), the original extract concentration in the pre-fermentation liquid, the original extract concentration in the fermentation process, the fermentation conditions (such as the oxygen concentration, aeration conditions, yeast species, amount of yeast added, the number of yeast grown, removal timing of yeast, fermentation temperature, fermentation time, pressure setting, carbon dioxide concentration, amount of enzyme added, type of enzyme, and timing of enzyme addition), and the like.

In the present specification, the term "apparent fermentation degree" means the proportion of the concentration of sugar that can be consumed by yeast as a nutrient source for alcoholic fermentation to the total concentration of sugar contained in the pre-fermentation liquid. For example, the apparent fermentation degree AA of the beer-taste beverage can be calculated from Formula (1) set forth below.

$$\text{Formula (1): AA (\%)} = 100 \times (P - Es)/P$$

In Formula (1) set forth above, "P" is an original extract (original wort extract), and can be measured by the method described in the "BCOJ Beer Analysis Method" (fermented by The Brewing Society of Japan, edited by Brewers Association of Japan, revised on November 1, 2004).

"Es" represents an apparent extract of the beer-taste beverage. The apparent extract can be calculated, for example, from Formula (2) set forth below as described in the "BCOJ Beer Analysis Method" (fermented by The Brewing Society of Japan, edited by Brewers Association of Japan, revised on November 1, 2004).

$$\text{Formula (2): Es} = -460.234 + 662.649 \times D - 202.414 \times D2$$

In Formula (2), D is the specific gravity of a degassed beer-taste beverage.

The apparent extract "Es" may have a negative value depending on D in Formula (2), and thus the calculated apparent fermentation degree may exceed 100%.

A malt proportion of the beer-taste beverage according to an aspect of the present invention may be greater than or equal to 5 mass%, greater than or equal to 10 mass%, greater than or equal to 20 mass%, greater than or equal to 30 mass%, greater than or equal to 40 mass%, greater than or equal to 50 mass%, greater than or equal to 55 mass%, greater than or equal to 60 mass%, greater than or equal to 65 mass%, greater than or equal to 66 mass%, greater than 66 mass%, greater than or equal to 67 mass%, greater than or equal to 70 mass%, greater than or equal to 75 mass%, greater than or equal to 80 mass%, greater than or equal to 85 mass%, greater than or equal to 90 mass%, greater than or equal to 95 mass%, or 100 mass%, and may be less than or equal to 100 mass%, less than 100 mass%, less than or equal to 98 mass%, less than or equal to 95 mass%, less than or equal to 90 mass%, less than or equal to 85 mass%, less than or equal to 80 mass%, less than or equal to 75 mass%, less than or equal to 70 mass%, less than or equal to 68 mass%, less than or equal to 67 mass%, or less than or equal to 66 mass%.

In the present specification, the term "malt proportion" means a value calculated according to the Interpretation Notice on the Liquor Tax Law and the Administrative Ordinance Related to Alcoholic Beverages and the like enforced on April 1, 2018.

Note that in a case of suppressing the malt proportion, it is preferable to increase amounts of raw materials (carbon source and nitrogen source) other than malt, which can be utilized by yeast. Examples of carbon sources as the yeast assimilable raw material include monosaccharides, disaccharides, trisaccharides, and sugar solutions thereof; examples of nitrogen sources as the yeast assimilable raw material include yeast extracts, soybean proteins, malt, soybeans, yeast extracts, peas, wheat malt, ungerminated cereal grains, and decomposition products thereof. Examples of the ungerminated grains include barley, wheat, rye, common wild oat, oat, adlay, rice (such as white rice and brown rice), corn, kaoliang, potato, legumes (such as soybean and pea), buckwheat, sorghum, foxtail millet, and Japanese millet, which are ungerminated. In addition, starches collected from these grains and extracts thereof may be used.

The beer-taste beverage according to an aspect of the present invention may be beer.

In the present specification, the term "beer" means a beverage produced by using malt, hops, and water as raw materials and fermenting them with yeast, and it specifically means one defined by the Interpretation Notice on the Liquor Tax Law and the Administrative Ordinance Related to Alcoholic Beverages and the like enforced on April 1, 2018.

That is, in a case where the beer-taste beverage according to an aspect of the present invention is beer, the alcohol content is adjusted by the fermentation process using yeast.

The color of the beer-taste beverage according to an aspect of the present invention is not particularly limited, and may be amber or golden like ordinary beer, black like dark beer, or colorless and transparent, or may be colored as desired by adding a coloring agent or the like. The color of the beer-taste beverage can be determined by the naked eye, but may be defined by the total light transmittance, chromaticity, or the like.

The chromaticity of the beer-taste beverage according to an aspect of the present invention may be greater than or equal to 0.5 EBC, greater than 1.0 EBC, greater than or equal to 2.0 EBC, greater than or equal to 3.0 EBC, greater than or equal to 5.0 EBC, greater than or equal to 7.0 EBC, greater than or equal to 10 EBC, greater than or equal to 15 EBC, greater than or equal to 20 EBC, greater than or equal to 25 EBC, greater than or equal to 30 EBC, greater than or equal to 35 EBC, greater than or equal to 40 EBC, greater than or equal to 45 EBC, greater than or equal to 50 EBC, greater than or equal to 55 EBC, greater than or equal to 60 EBC, greater than or equal to 65 EBC, greater than or equal to 70 EBC, greater than or equal to 75 EBC, greater than or equal to 80 EBC, greater than or equal to 85 EBC, greater than or equal to 90 EBC, greater than or equal to 95 EBC, greater than or equal to 100 EBC, greater than or equal to 105 EBC, greater than or equal to 110 EBC, greater than or equal to 115 EBC, greater than or equal to 120 EBC, greater than or equal to 125 EBC, greater than or equal to 130 EBC, greater than or equal to 135 EBC, greater than or equal to 145 EBC, or greater than or equal to 150 EBC, and may be less than or equal to 500 EBC, less than or equal to 450 EBC, less than or equal to 400 EBC, less than or equal to 350 EBC, less than or equal to 300 EBC, less than or equal to 270 EBC, less than or equal to 250 EBC, less than or equal to 240 EBC, less than or equal to 230 EBC, less than or equal to 220 EBC, less than or equal to 210 EBC, less than or equal to 200 EBC, less than or equal to 190 EBC, less than or equal to 180 EBC, less than or equal to 170 EBC, less than or equal to 160 EBC, less than or equal to 155 EBC, less than or equal to 150 EBC, less than or equal to 145 EBC, less than or equal to 140 EBC, less than or equal to 135 EBC, less than or equal to 130 EBC, less than or equal to 125 EBC, less than or equal to 120 EBC, less than or equal to 115 EBC, less than or equal to 110 EBC, less than or equal to 105 EBC, less than or equal to 100 EBC, less than or equal to 95 EBC, less than or equal to 90 EBC, less than or equal to 85 EBC, less than or equal to 80 EBC, less than or equal to 75 EBC, or less than or equal to 70 EBC.

As used herein, the "chromaticity" of the beverage can be measured by a measurement method described in "8.8 Chromaticity" of Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013). Note that the "chromaticity" of the beverage is specified by the unit of chromaticity (EBC unit) defined by the European Brewery Convention. A beverage with a smaller numerical value has a lighter and brighter color, whereas a beverage with a larger numerical value has a deeper and darker color.

In addition, the chromaticity of the beer-taste beverage according to an aspect of the present invention can be controlled, for example, by appropriately adjusting the type of malt used, the blending proportion in a case of using two or more types of malts in combination, or the boiling conditions for preparation of the pre-fermentation liquid. More specifically, for example, to increase the chromaticity of the beer-taste beverage, the chromaticity can be adjusted by increasing the blending proportion of dark malt as the malt, increasing the temperature during boiling treatment, increasing boiling time, performing decoction during preparation of a saccharified liquid, adding a colorant such as a caramel dye, and the like. Further, the chromaticity can also be adjusted to a higher level by increasing the original wort extract concentration or increasing the malt proportion.

The pH of the beer-taste beverage according to an aspect of the present invention is preferably greater than or equal to 2.0, greater than or equal to 2.2, greater than or equal to 2.4, greater than or equal to 2.6, greater than or equal to 2.8, greater than or equal to 3.0, greater than or equal to 3.1, greater than or equal to 3.2, greater than or equal to 3.3, greater than or equal to 3.4, greater than or equal to 3.5, greater than or equal to 3.6, greater than or equal to 3.7, greater than or equal to 3.8, greater than or equal to 3.9, or greater than or equal to 4.0, and preferably less than or equal to 5.4, less than or equal to 5.2, less than or equal to 5.0, less than or equal to 4.9, less than or equal to 4.8, less than or equal to 4.7, less than or equal to 4.6, less than or equal to 4.55, or less than or equal to 4.5.

The beer-taste beverage of an aspect of the present only needs to be a mode in which the beverage is filled in a container, and examples of the container include a bottle, a PET bottle, a can, and a barrel. In particular, from the viewpoint of easy portability, the container is preferably a can, a bottle, or a PET bottle.

1.1 Ingredients

As the main ingredient of the beer-taste beverage of an aspect of the present invention, malt may be used together with water, or malt does not need to be used. Furthermore, the beer-taste beverage according to an aspect of the present invention may be a beverage using hops as an ingredient, or may be a beverage not using hops.

Besides, a preservative, a sweetener, a water-soluble dietary fiber, a bittering agent or bitterness-imparting agent, an antioxidant, a flavoring, an acidulant, a salt, and/or the like may be used.

1.1.1 Malt, grain other than malt

In a case where malt is used as the ingredient, the malt refers to malt prepared by germinating seeds of barley and/or wheat or the like, such as barley, wheat, rye, common wild oat, oat, or adlay, drying the germinated seeds, and removing roots, and may be from any production area and of any variety. As the malt used for the beer-taste beverage, only malt may be used, or malt and ungerminated barley or the like may be used in combination.

The malt used in an aspect of the present invention is preferably barley malt. Barley malt is one of the malts most commonly used as a raw material for Japanese beer-taste beverages. There are several types of barley, such as two-rowed barley and six-rowed barley, and any of them may be used. Further, in addition to ordinary malt, colored malt or the like can also be used. When colored malt is used, different types of colored malts may be appropriately used in combination, or one colored malt may be used.

The malt used in an aspect of the present invention preferably has a modification of greater than or equal to 80%. When the modification is less than 80%, the viscosity of the wort increases or the turbidity thereof increases, and the production efficiency such as wort filterability or beer filterability deteriorates. Thus, it is preferable to use malt with modification of greater than or equal to 80%. In Examples and Comparative Examples described later, malt having a modification of greater than or equal to 80% was used. The modification can be measured by the method described in 3.1.3.8 Modification and Homogeneity (Calcofluor Carlsberg Method - EBC) in MEBAK Raw Materials Barley Adjuncts Malt Hops And Hop Products Published by the Chairman Dr. Fritz Jacob Self-published by MEBAK 85350 Freising-Weihenstephan, Germany 2011.

Note that in the beer-taste beverage according to an aspect of the present invention, the malt to be used is preferably selected as appropriate in accordance with the desired chromaticity of the beer-taste beverage, and the malt to be selected may be used alone or in combination of two or more kinds thereof.

In addition to or instead of malt, a grain other than malt may be used.

Examples of the grain other than malt include barley and/or wheat and the like that do not fall under malt (such as barley, wheat, rye, common wild oat, oat, and adlay), rice (such as white rice and brown rice), corn, kaoliang, potato, legumes (such as soybean and pea), buckwheat, sorghum, foxtail millet, Japanese millet, starch resulting therefrom, and extracts thereof.

Note that in a case of suppressing the malt proportion or not using malt, it is preferable to increase amounts of raw materials (carbon source and nitrogen source) other than malt, which can be utilized by yeast. Examples of the carbon source of the yeast-assimilable raw material include monosaccharides, disaccharides, trisaccharides, and sugar solutions thereof, and examples of the nitrogen source include yeast extract, amino acid-containing materials (such as soybean protein), soybean, yeast extract, pea, wheat malt, ungerminated grains, and decomposition products thereof.

The fruit, pericarp, bark, leaf, flower, stem, root, and seed of a plant other than plants of the Gramineae family, such as barley and/or wheat, that can be used as an ingredient can be appropriately selected.

Specific examples of the plant other than plants of the Gramineae family include citrus fruits, soft fruits, herbs, and spices. Examples of the citrus fruits include an orange, Citrus junos, a lemon, a lime, a mandarin orange, a grapefruit, Citrus Iyo Group, Citrus japonica, Citrus sphaerocarpa, Citrus limetta 'Daidai', Citrus depressa, and Citrus sudachi.

Examples of the soft fruits include a peach, a grape, a banana, an apple, a grape, a pineapple, a strawberry, a pear, a muscat, and a blackcurrant. Examples of the herbs and the spices include coriander, pepper, fennel, Sichuan pepper, zanthoxyli fructus, cardamom, caraway, nutmeg, mace, juniper berry, allspice, vanilla, elderberry, grains of paradise, anise, and star anise.

These may be used as they are, may be used after being crushed, may be used in the form of an extract derived by extraction with an extraction solvent such as water or ethanol, or may be used after being squeezed (fruit juice or the like). One of these herbs and spices may be used alone, or two or more thereof may be used in combination.

The above can be used as appropriate in accordance with the gusto of consumers, but in order to enjoy a clear and refreshing taste like beer, it is preferable that the above citrus fruits, soft fruits, herbs, and spices be not used at all or used in a minimum amount as ingredients. In particular, a blackcurrant gives an inappropriate milky aroma in beer, and thus a blackcurrant or blackcurrant juice is preferably not used at all or used in a minimum amount in the ingredient.

### 1.1.2 Hops

In a case of using hops in an aspect of the present invention, examples of the form of the hops include pellet hops, powdered hops, and hop extract. The hops used may be a processed hop product, such as isomerized hops or reduced hops.

In the case of using hops in an aspect of the present invention, the amount of hops to be added is appropriately adjusted but is preferably from 0.0001 to 1 mass% based on the total amount (100 mass%) of the ingredients for the beverage.

A beer-taste beverage made using hops as an ingredient is a beverage containing iso-$\alpha$-acid, which is a component derived from hops. The content of iso-$\alpha$-acid in the beer-taste beverage made using hops may be greater than 0.1 mass ppm or greater than 1.0 mass ppm based on the total amount (100 mass%) of the beer-taste beverage.

On the other hand, the content of iso-$\alpha$-acid in a beer-taste beverage made without using hops may be less than or equal to 0.1 mass ppm based on the total amount (100 mass%) of the beer-taste beverage.

In the present specification, the content of iso-$\alpha$-acid means a value measured by the high-performance liquid chromatography (HPLC) analysis method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

### 1.1.3 Preservative

The beer-taste beverage according to an aspect of the present invention may be a beverage having a preservative.

Examples of the preservative used in an aspect of the present invention include benzoic acid; benzoate salts, such as sodium benzoate; benzoate esters, such as propyl parahydroxybenzoate and butyl parahydroxybenzoate; and dimethyl dicarbonate. For the preservative, a commercially available preparation, such as Kyohryoku Sanpurezah (Powerful Sanplezer) (a mixture of sodium benzoate and butyl benzoate, available from San-Ei Gen F.F.I., Inc.) may be used.

One of these preservatives may be used alone, or two or more of these preservatives may be used in combination.

In a case of blending a preservative in the beer-taste beverage according to an aspect of the present invention, the content of the preservative is preferably 5 to 1200 mass ppm, more preferably 10 to 1100 mass ppm, even more preferably 15 to 1000 mass ppm, and still even more preferably 20 to 900 mass ppm.

### 1.1.4 Sweetener

The beer-taste beverage according to an aspect of the present invention may be a beverage further containing a sweetener.

Examples of the sweetener used in an aspect of the present invention include saccharified liquid in which starch derived from grain has been degraded with an acid, an enzyme, or the like; saccharides such as commercially available starch syrup; sucrose; tri- or higher saccharides; isomerized sugar; sugar alcohols; natural sweeteners, such as stevia; and artificial sweeteners.

One of these sweeteners may be used alone, or two or more of these sweeteners may be used in combination.

These saccharides may be in the form of a liquid, such as a solution, or a solid, such as a powder.

There are no particular limitations on the type of raw material grain for starch, the method of purifying starch, and the conditions for treatment, such as hydrolysis with an enzyme or an acid. For example, a saccharide may be used with the proportion of maltose increased by appropriately setting conditions for hydrolysis with an enzyme or an acid. In addition, sucrose, fructose, glucose, maltose, trehalose, maltotriose, isomaltose, isomaltotriose, and solutions thereof (sugar solutions) or the like can also be used.

Examples of the artificial sweetener include aspartame, acesulfame potassium (acesulfame K), sucralose, and neotame.

Examples of the water-soluble dietary fiber include indigestible dextrin, polydextrose, guar gum degradation products, pectin, glucomannan, alginic acid, laminarin, fucoidin, and carrageenan. From the viewpoint of versatility, such as stability and safety, indigestible dextrin or polydextrose is preferred.

The content of the dietary fiber may be adjusted within the above range by adding a commercially available product, or may be adjusted in the production process so that the content of dietary fiber derived from a raw material such as malt falls within the above range. In the case where a commercially available product is added, the powderiness unsuitable for beer-taste beverages can be suppressed by adjusting the content of dietary fiber within the above-described range. In the case where the content of dietary fiber is adjusted in the production process, the content of dietary fiber is adjusted within the above range, and thus, for example, the filterability in wort filtration and beer filtration can be improved, and the production efficiencies can be increased.

When the content of dietary fiber is adjusted in the production process, the content of dietary fiber in the beer-taste beverage according to an aspect of the present invention can be adjusted by adjusting the addition of dilution water or carbonated water, the types and amounts of ingredients (barley and/or wheat, malt, corn, sugar solution, and the like), the type and amount of enzyme, the timing for addition of enzyme (during a saccharification step, before addition of yeast, after addition of yeast, during aging, or the like), and the set temperature, pH, and retention time of each temperature region in preparation of a saccharified liquid.

1.1.5 Bittering agent and bitterness-imparting agent

The beer-taste beverage according to an aspect of the present invention may be a beverage further containing one or more selected from the group consisting of a bittering agent and a bitterness-imparting agent.

In the beer-taste beverage according to an aspect of the present invention, the bitterness is preferably imparted by hops, and a bittering agent or a bitterness-imparting agent indicated below may be used together with hops. Alternatively, the bittering agent or bitterness-imparting agent indicated below may be used instead of hops without using hops.

The bittering agent or bitterness-imparting agent is not particularly limited, and a substance used as a bitterness-imparting agent in ordinary beer and low-malt beer can be used. Examples thereof include rosemary, litchi, caraway, juniper berry, sage, rosemary, Ganoderma sichuanense, bay laurel, quassin, caffeine, absinthin, naringin, Phellodendron amurense, citrus extract, bitter wood extract, coffee extract, tea extract, bitter gourd extract, lotus embryo extract, Aloe arborescens extract, rosemary extract, litchi extract, laurel extract, sage extract, caraway extract, Artemisia absinthium extract, absinthin, and alginic acid.

One of these bittering agents and bitterness-imparting agents may be used alone, or two or more thereof may be used in combination.

1.1.6 Antioxidant

The beer-taste beverage according to an aspect of the present invention may be a beverage further containing an antioxidant.

The antioxidant is not particularly limited, and a substance used as an antioxidant in ordinary beer and low-malt beer can be used, and examples include ascorbic acid, erythorbic acid, and catechin.

One of these antioxidants may be used alone, or two or more thereof may be used in combination.

1.1.7 Flavoring

The beer-taste beverage according to an aspect of the present invention may be a beverage further containing a flavoring.

The flavoring is not particularly limited, and a general beer flavoring can be used. The beer flavoring is used for imparting a beer-like taste, and an ester or a higher alcohol can be used.

The content of the flavor component such as ester or higher alcohol can be adjusted by separately adding a flavoring containing these flavor components. However, when alcoholic fermentation is involved in the production process, the content may be adjusted by alcoholic fermentation without adding a flavoring or together with addition of a flavoring.

The content of the flavor component such as ester or higher alcohol in a case of involving alcoholic fermentation can be controlled by appropriately setting the addition of dilution water or carbonated water, the sugar composition and amino acid composition of the pre-fermentation liquid before addition of yeast, sugar concentration, amino acid concentration, original extract concentration in the pre-fermentation liquid, yeast species, fermentation conditions (such as oxygen concentration, aeration conditions, yeast species, amount of yeast added, the number of yeast grown, yeast removal timing, fermentation temperature, fermentation time, pressure setting, and carbon dioxide concentration), cooling timing, and the like.

1.1.8 Acidulant

The beer-taste beverage according to an aspect of the present invention may be a beverage further containing an acidulant.

The acidulant is not particularly limited as long as it is a substance with a sour taste, and examples include tartaric acid, phosphoric acid, citric acid, gluconic acid, lactic acid, malic acid, phytic acid, acetic acid, succinic acid, glucono-delta-lactone, and salts thereof.

Among these, the acidulant is preferably at least one selected from tartaric acid, phosphoric acid, citric acid, gluconic acid, lactic acid, malic acid, phytic acid, acetic acid, succinic acid, and salts thereof, more preferably at least one selected from tartaric acid, phosphoric acid, citric acid, lactic acid, tartaric acid, acetic acid, and salts thereof, and even more preferably at least one selected from tartaric acid, phosphoric acid, and lactic acid.

One of these acidulants may be used alone, or two or more of these acidulants may be used in combination.

1.1.9 Salts

The beer-taste beverage according to an aspect of the present invention may be a beverage further containing salts.

Examples of the salts include sodium chloride, acid potassium phosphate, acid calcium phosphate, ammonium phosphate, magnesium sulfate, calcium sulfate, potassium metabisulfite, calcium chloride, magnesium chloride, potassium nitrate, ammonium sulfate, potassium chloride, monosodium citrate, disodium citrate, and trisodium citrate.

One of these salts may be used alone, or two or more of these salts may be used in combination.

1.2 Carbonation gas

As the carbonation gas contained in the beer-taste beverage according to an aspect of the present invention, carbonation gas contained in an ingredient may be used, or carbonation gas may be dissolved by mixing with carbonated water, addition of carbonation gas, or the like.

Note that the carbonation gas generated in the fermentation process of the beer-taste beverage can be used as it is, but the amount of the carbonation gas may be prepared by appropriately adding carbonated water.

The carbonation gas concentration of the beer-taste beverage according to an aspect of the present invention is preferably greater than or equal to 0.30 (w/w)%, more preferably greater than or equal to 0.35 (w/w)%, more preferably greater than or equal to 0.40 (w/w)%, even more preferably greater than or equal to 0.42 (w/w)%, even more preferably greater than or equal to 0.45 (w/w)%, still even more preferably greater than or equal to 0.47 (w/w)%, and particularly preferably greater than or equal to 0.50 (w/w)%, and preferably less than or equal to 0.80 (w/w)%, more preferably less than or equal to 0.70 (w/w)%, even more preferably less than or equal to 0.60 (w/w)%, still even more preferably less than or equal to 0.57 (w/w), and particularly preferably less than or equal to 0.55 (w/w)%.

Note that, in the present specification, the carbonation gas concentration can be measured in a process in which a container that contains a target beverage is immersed in a water tank at 20°C for 30 minutes or longer with being shaken from time to time so that the temperature of the beverage becomes 20°C and then the concentration is measured with a gas volume analyzer (e.g., GVA-500 (available from Kyoto Electronics Manufacturing Co., Ltd.) etc.).

In a case where the beer-taste beverage according to an aspect of the present invention is a packaged beverage, the carbonation gas pressure of the packaged beverage only needs to be appropriately adjusted such that the carbonation gas concentration is in the ranges described above, and may be less than or equal to 5.0 $kg/cm^2$, less than or equal to 4.5 $kg/cm^2$, or less than or equal to 4.0 $kg/cm^2$, and may be greater than or equal to 0.20 $kg/cm^2$, greater than or equal to 0.50 $kg/cm^2$, or greater than or equal to 1.0 $kg/cm^2$. Any of these upper and lower limits may be combined; for example, the carbonation gas pressure of the beverage may be greater than or equal to 0.20 $kg/cm^2$ and less than or equal to 5.0 $kg/cm^2$, greater than or equal to 0.50 $kg/cm^2$ and less than or equal to 4.5 $kg/cm^2$, or greater than or equal to 1.0 $kg/cm^2$ and less than or equal to 4.0 $kg/cm^2$.

In the present specification, the gas pressure refers to the gas pressure in the container except in special cases.

The pressure can be measured by a method well-known to those skilled in the art, for example, using a method in which a sample adjusted to 20°C is fixed to a gas internal pressure meter, the stopcock of the gas internal pressure meter is opened once to release the gas, the stopcock is closed again, the gas internal pressure meter is shaken, and a value when the pointer reaches a certain position is read; or using a commercially available gas pressure measuring instrument.

## 1.3 Other additives

In the beer-taste beverage according to one aspect of the present invention, various additives may be added as necessary to the extent that the effects of the present invention are not compromised.

Examples of such an additive include colorants; foam-forming agents; fermentation promoters; yeast extract; protein-based substances, such as peptide-containing substances; and seasonings, such as amino acids.

The coloring agent is used to impart a beer-like color to the beverage, and a caramel dye or the like can be used. The foam-forming agent is used to form beer-like foam or to keep the foam of the beverage, and a plant-extracted saponin-based substance, such as soybean saponin and/or quillaja saponin; a plant protein, such as corn and/or soybean; a peptide-containing substance, such as a collagen peptide; a yeast extract; an emulsifiers (sucrose fatty acid ester, glycerin fatty acid ester, lecithin, and/or lysolecithin); and/or the like can be appropriately used.

The fermentation accelerator is used for promoting fermentation by yeasts, and examples thereof include a yeast extract, a bran component from such as rice and barley and/or wheat, a vitamin, and a mineral agent. A single type of fermentation accelerator can be used alone or two or more types may be used in combination.

## 1.4 Packaged beverage

The beer-taste beverage according to an aspect of the present invention may be a packaged beverage packaged in a container. For the packaged beverage, a container of any form and material may be used, and examples of the container include a bottle, a can, a barrel, or a PET bottle. In particular, from the viewpoint of easy portability, the container is preferably a can, a bottle, or a PET bottle.

## 2 Method for producing beer-taste beverage

Examples of the method for producing a beer-taste beverage according to an aspect of the present invention include a method including at least the following steps (a) and (b) and further including the following step (c):

· step (a): adjusting an alcohol content of the beer-taste beverage to greater than or equal to 10.0 (v/v)%;
· step (b): adjusting a real extract concentration of the beer-taste beverage to greater than or equal to 11.8 (w/w)%; and
· step (c): adjusting a protein content of the beer-taste beverage to greater than or equal to 1.0 mg/mL.

Note that the order of steps (a) to (c) is not particularly limited.

The method for producing a beer-taste beverage according to an aspect of the present invention is not particularly limited, and may be a method for producing a beer-taste beverage through a fermentation process or may be a method for producing a beer-taste beverage without a fermentation process.

Hereinafter, a method for producing a fermented beer-taste beverage through a fermentation process and a method for producing a non-fermented beer-taste beverage without a fermentation process will be described.

## 2.1 Method for producing fermented beer-taste beverage

As the method for producing a fermented beer-taste beverage according to an aspect of the present invention, a method through a fermentation process using yeast is exemplified and includes, for example, the following steps (1) to (2):

· step (1): performing at least one treatment of the group consisting of saccharification treatment, boiling treatment, and solid content removal treatment, using various ingredients to produce a pre-fermentation liquid; and
· step (2): adding yeast to the pre-fermentation liquid to allow fermentation.

In the method for producing a fermented beer-taste beverage according to an aspect of the present invention, the steps (a) to (c) above, and adjustment of the total polyphenol amount, the bitterness unit, and the pH can be performed at one or more timings of (i) to (iii) below. In a case where the steps (a) to (c) and the adjustment described above can be performed at the same time by performing the steps (1) and (2), it is not necessary to separately perform these steps.

· (i): At the same time as at least one of step (1) and step (2)
· (ii): Between step (1) and step (2)

· (iii): After step (2)

Note that the step (a) is performed in the fermentation process of the step (2), and, as necessary, may be performed by blending spirits or the like after the step (2).

The step (b) is performed in the steps (1) and (2), and, as necessary, may be performed by adding a dietary fiber, a saccharide (such as starch, a sweetener, or a carbohydrate) or the like after the step (2).

The step (c) is performed in the steps (1) and (2), and, as necessary, may be performed by adding collagen or the like after the step (2).

Hereinafter, each step of the method for producing a fermented beer-taste beverage according to an aspect of the present invention will be described.

2.1.1 Step (1)

Step (1) is a step of performing at least one treatment of the group consisting of saccharification treatment, boiling treatment, and solid content removal treatment, using various ingredients to produce a pre-fermentation liquid.

For example, in a case of using malt as an ingredient, various ingredients including water and malt are fed in a preparation kettle or a preparation tank, and an enzyme such as amylase is added as necessary. Examples of various ingredients that may be added besides malt include hops, a preservative, a sweetener, a water-soluble dietary fiber, a bittering agent or bitterness-imparting agent, an antioxidant, a flavoring, an acidulant, a pigment, and/or the like. These ingredients may be added before performing the saccharification treatment, during the saccharification treatment, or after completion of the saccharification treatment. In addition, these ingredients may be added after the fermentation in the next step.

A mixture of the various ingredients is heated to saccharify the starch of the ingredients to perform saccharification treatment.

The temperature and time of the saccharification treatment are preferably appropriately adjusted in view of the type of malt used, the malt proportion, ingredients besides water and malt, the type and amount of the enzyme used, the original wort extract concentration of the finally resulting beverage, and the like. In an aspect of the present invention, from the viewpoint of adjusting the sugar concentration and turbidity of the beer-taste beverage to the above ranges, the temperature of the saccharification treatment is preferably from 55 to 75°C, and the time of the saccharification treatment is preferably from 30 to 240 minutes.

The saccharified liquid is preferably subjected to boiling treatment.

When this boiling treatment is performed, hops, a bittering agent, and the like are preferably added in the case of using them as ingredients. Hops, a bittering agent, and/or the like may be added between the start of boiling the saccharified liquid and before the completion of the boiling.

After completion of the boiling treatment, it is preferable that the liquid be transferred to a whirlpool and cooled to 0 to 23°C to form a cooled liquid, and then a treatment for removing a solid content such as coagulated protein be performed. With this treatment, the original wort extract concentration can be adjusted to the above range. In this way, a pre-fermentation liquid is prepared.

Note that in this step, there may be performed a filtration through a filter having a predetermined pore diameter (e.g., a pore diameter less than 30 $\mu$m) to perform a process for removing a solid content.

In place of the saccharified liquid, a malt extract added with hot water may be used, and this mixture is subjected to boiling treatment after hops, a bittering agent, and the like are added to prepare a pre-fermentation liquid.

Note that, as various ingredients, in the case of not using malt, a liquid sugar solution may be prepared by mixing, together with warm water, a liquid sugar containing a carbon source; a nitrogen source as an amino acid-containing raw material other than barley and/or wheat, or malt; hops; a dietary fiber; a preservative; a sweetener; an antioxidant; a bitterness-imparting agent; a flavoring; an acidulant; a pigment; and/or the like, and then such a liquid sugar solution is subjected to boiling treatment to prepare a pre-fermentation liquid.

In the case of using hops, the hops may be added before the boiling treatment or may be added between the start of boiling the liquid sugar solution and before the completion of the boiling.

2.1.2 Step (2)

Step (2) is a step in which yeasts are added to the pre-fermentation liquid obtained in step (1) to perform fermentation.

The yeast used in this step can be appropriately selected in view of the type of the fermented beverage to be produced, the target flavor, the fermentation conditions, and the like, and top-fermenting yeast may be used, or bottom-fermenting yeast may be used.

The yeast in the form of a yeast suspension as is may be added to the raw material liquid, or a slurry produced by concentrating the yeast by centrifugation or sedimentation may be added to the stock solution. Alternatively, a material obtained by completely removing the supernatant after the centrifugation may be added. The amount of yeast added to the stock solution can be appropriately set and is, for example, approximately from 5.0 x $10^6$ cells/mL to 1.0 x $10^9$ cells/mL.

The fermentation conditions in performing fermentation can be set as appropriate, but the fermentation temperature is preferably 5 to 25°C from the viewpoint of adjusting the alcohol content and the sugar concentration of the beer-taste beverage to the ranges described above. The alcohol content and the sugar concentration of the beer-taste beverage can be adjusted by appropriately setting the type, amount, and timing of addition of the polysaccharide-degrading enzyme such as transglucosidase. They can be also adjusted by changing the temperature (temperature increase or temperature decrease) or pressure of the fermented liquid during the fermentation process, as necessary.

After the fermentation, filtration treatment for removing yeast in the beer-taste beverage may be performed, or filtration treatment does not need to be performed. In addition, water or the above-described various additives may be added, as necessary.

The beer-taste beverage thus produced according to an aspect of the present invention is filled in a predetermined container and distributed to the market as a product.

The method of packaging the beer-taste beverage is not particularly limited, and a packaging method known to those skilled in the art can be used. Through the packaging process, the beer-taste beverage according to the present invention is filled and sealed in a container. In the packaging process, a container of any form and material may be used, and examples of the container include containers described in "1.4 Packaged beverage".

2.2 Method for producing non-fermented beer-taste beverage

A method for producing a non-fermented beer-taste beverage according to an aspect of the present invention only needs to be a method without the fermentation process, and includes, for example, the following steps (i) to (ii):

· step (i): performing at least one treatment of saccharification treatment, boiling treatment, or solid content removal treatment on an ingredient to obtain a pre-beverage liquid; and

· step (ii): cooling the pre-beverage liquid obtained in step (i) and adding carbonation gas thereto.

The step (i) is the same as the step of producing a pre-fermentation liquid of the step (1) in the "method for producing a fermented beer-taste beverage" described above.

As a method of adding carbonation gas in the step (ii), carbonation gas may be added by mixing the cooled pre-beverage liquid formed by cooling the pre-beverage liquid produced in the step (i) with carbonated water, or carbonation gas may be directly added to the cooled beverage stock solution. At the same timing as the step (ii), additives such as a preservative, a sweetener, a flavoring, an acidulant, and a pigment may be added as necessary in adding carbonation gas.

In the method for producing a non-fermented beer-taste beverage according to an aspect of the present invention, it is preferable that the step (a) is performed by blending spirits or the like at least after the step (i).

Note that the step (a) may be performed between the step (i) and the step (ii) or in the step (i) and the step (ii).

The step (b) and the step (c) may be also performed between the step (i) and the step (ii) or in the step (i) and the step (ii).

The non-fermented beer-taste beverage thus produced is filled in a predetermined container and distributed to the market as a product.

The method for packaging the non-fermented beer-taste beverage is not particularly limited, and a packaging method known to those skilled in the art can be used. Through the packaging process, the non-fermented beer-taste beverage is filled and sealed in a container. In the packaging process, a container of any form and/or material may be used, and examples of the container include those described above.

Examples

Hereinafter, the present invention will be described in more detail by examples, but the present invention is not limited by these examples.

Examples 1 to 10 and Comparative Examples 1 to 4

Preparation of Beverage

Crushed barley malt was fed in a preparation tank containing 40 L of warm water kept at 40 to 55°C, then the temperature was raised to 78°C while the temperature was repeatedly raised and kept in a stepwise manner, then malt dregs were removed by filtration, and a saccharified liquid was produced. Next, hops were further added to the saccharified liquid, boiling was performed, and solid-liquid separation treatment was performed to produce clear wort. Then, beer yeast (bottom-fermenting yeast) was added to the pre-fermentation liquid formed by cooling the wort, and the fermentation temperature and the fermentation time were adjusted to perform alcoholic fermentation in such a manner to achieve a predetermined alcohol content. Then, the yeast was removed by filtration to produce a fermented liquid. As necessary, maltose and/or spirits were added to the fermented liquid to produce a beer-taste beverage. The produced beer-taste beverage had a bitterness unit of 40 to 90 BUs, a sugar content of 1.0 to 3.5 g/100 mL, a pH of 4.2 to 4.7, and a carbonation gas concentration of 0.205 to 0.304 (w/w)%.

Note that in each of the Examples and Comparative Examples, the alcohol content and the real extract concentration were adjusted to the values shown in Table 1 by appropriately setting the set temperature and the holding time of each temperature region, the amount of hop added, the fermentation temperature, the fermentation time, and the like when preparing the saccharified liquid, and further adjusting the amount of maltose added and the amount of spirits added.

Sensory Evaluation

Three panelists who had been regularly trained evaluated the beer-taste beverages obtained in Examples and Comparative Examples cooled to approximately 4°C for the "presence or absence of bitterness unsuitable for a beer-taste beverage" and the "presence or absence of a desirable body suitable for a beer-taste beverage" of each beverage for testing by a score in a range of 5.0 (maximum value) to 1.0 (minimum value) in increments of 0.5 based on the score criteria described below, and average values of the scores of the three panelists were calculated. The results are listed in Table 1.

In the evaluation, samples that meet the following criteria "5.0", "4.0", "3.0", "2.0", and "1.0" were prepared in advance to standardize the criteria among the panelists. In addition, in all the sensory evaluation of Table 1, for the same beverage, no difference in a score value greater than or equal to 1.5 was observed among the panelists.

Score criteria for presence or absence of bitterness unsuitable for beer-taste beverage

· "5.0": Unsuitable bitterness is not perceived at all.
· "4.0": Unsuitable bitterness is hardly perceived.
· "3.0": Unsuitable bitterness is not generally perceived.
· "2.0": Unsuitable bitterness is strongly perceived.
· "1.0": Unsuitable bitterness is very strongly perceived.

Score criteria for presence or absence of desirable body suitable for beer-taste beverage

· "5.0": The desirable body is very strongly perceived in the beer-taste beverage.
· "4.0": The desirable body is strongly perceived in the beer-taste beverage.
· "3.0": The desirable body is sufficiently perceived in the beer-taste beverage.
· "2.0": The body is hardly perceived.
· "1.0": The body is not perceived at all.

[Table 1]

Table 1

|  |  | Comparative Example 1 | Example 1 | Example 2 |
|---|---|---|---|---|
| Alcohol content | (v/v)% | 10.0 | 10.0 | 10.0 |
| Real extract concentration | (w/w)% | 10.0 | 11.8 | 20.0 |
| Real extract concentration/alcohol content |  | 1.00 | 1.18 | 2.00 |
| Presence or absence of addition of maltose | - | Present | Present | Present |

(continued)

|  |  | Comparative Example 1 | Example 1 | Example 2 |
|---|---|---|---|---|
| Presence or absence of addition of spirits | - | Absent | Absent | Absent |
| Presence or absence of unsuitable bitterness | | 2.50 | 3.25 | 4.00 |
| Presence or absence of desirable body | | 2.25 | 3.25 | 4.50 |

|  |  | Comparative Example 2 | Example 3 | Example 4 | Example 5 |
|---|---|---|---|---|---|
| Alcohol content | (v/v)% | 18.0 | 18.0 | 18.0 | 18.0 |
| Real extract concentration | (w/w)% | 10.0 | 11.8 | 16.0 | 18.0 |
| Real extract concentration/alcohol content | | 0.56 | 0.66 | 0.89 | 1.00 |
| Presence or absence of addition of maltose | - | Absent | Absent | Absent | Present |
| Presence or absence of addition of spirits | - | Present | Present | Absent | Absent |
| Presence or absence of unsuitable bitterness | | 2.00 | 3.75 | 4.25 | 4.75 |
| Presence or absence of desirable body | | 2.00 | 3.75 | 4.50 | 4.75 |

|  |  | Comparative Example 3 | Example 6 | Example 7 | Example 8 |
|---|---|---|---|---|---|
| Alcohol content | (v/v)% | 20.0 | 20.0 | 20.0 | 20.0 |
| Real extract concentration | (w/w)% | 10.0 | 11.8 | 16.0 | 18.0 |
| Real extract concentration/alcohol content | | 0.50 | 0.59 | 0.80 | 0.90 |
| Presence or absence of addition of maltose | - | Absent | Absent | Absent | Present |
| Presence or absence of addition of spirits | - | Present | Present | Present | Absent |
| Presence or absence of unsuitable bitterness | | 1.75 | 3.50 | 3.75 | 4.50 |
| Presence or absence of desirable body | | 2.00 | 3.50 | 4.25 | 4.75 |

|  |  | Comparative Example 4 | Example 9 | Example 10 |
|---|---|---|---|---|
| Alcohol content | (v/v)% | 30.0 | 30.0 | 30.0 |
| Real extract concentration | (w/w)% | 10.0 | 11.8 | 20.0 |
| Real extract concentration/alcohol content | | 0.33 | 0.39 | 0.67 |
| Presence or absence of addition of maltose | - | Present | Present | Present |
| Presence or absence of addition of spirits | - | Present | Present | Present |
| Presence or absence of unsuitable bitterness | | 1.00 | 3.00 | 3.50 |
| Presence or absence of desirable body | | 1.25 | 3.50 | 4.50 |

In the beer-taste beverages of Examples 1 to 10, unsuitable bitterness was suppressed as compared with the beer-taste beverages of Comparative Examples 1 to 4, and as a result, the beer-taste beverages were high-alcohol beer-taste beverages having a desirable body.

Examples 11 to 17

Preparation of Beverage

Crushed barley malt was fed in a preparation tank containing 40 L of warm water kept at 40 to 55°C, then the temperature was raised to 78°C while the temperature was repeatedly raised and kept in a stepwise manner, then malt dregs were removed by filtration, and a saccharified liquid was produced. Next, hops were further added to the saccharified liquid, boiling was performed, and solid-liquid separation treatment was performed to produce clear wort. Then, beer yeast (bottom-fermenting yeast) was added to the pre-fermentation liquid formed by cooling the wort, and the fermentation temperature and the fermentation time were adjusted to perform alcoholic fermentation in such a manner to achieve a predetermined alcohol content. Then, the yeast was removed by filtration to produce a fermented liquid. Then, to the fermented liquid, spirits were added in Examples 11 to 13, and collagen having a weight average molecular weight of 1000 was added in Examples 15 to 17 to produce a beer-taste beverage. The produced beer-taste beverage had a bitterness unit of 40 to 90 BUs, a sugar content of 1.0 to 3.5 g/100 mL, a pH of 4.2 to 4.7, and a carbonation gas concentration of 0.205 to 0.304 (w/w)%.

Note that in each of the Examples and Comparative Examples, the alcohol content, the real extract concentration, and the protein content were adjusted to the values shown in Table 2 by appropriately setting the set temperature and the holding time of each temperature region, the amount of hop added, the fermentation temperature, the fermentation time, and the like when preparing the saccharified liquid, and further adjusting the amount of spirits added and the amount of collagen added.

Sensory Evaluation

Three panelists who had been well trained evaluated the beer-taste beverages obtained in examples and comparative examples cooled to approximately 4°C for the "presence or absence of the drinking sensation suitable for a beer-taste beverage" of each beverage for testing by a score in a range of 5.0 (maximum value) to 1.0 (minimum value) in increments of 0.5 based on the score criteria described below, and average values of the scores of the three panelists were calculated. The results are listed in Table 1.

In the evaluation, samples that meet the following criteria "5.0", "4.0", "3.0", "2.0", and "1.0" were prepared in advance to standardize the criteria among the panelists. In addition, in all the sensory evaluation of Table 2, for the same beverage, no difference in a score value greater than or equal to 1.5 was observed among the panelists.

Score criteria for presence or absence suitable for beer-taste beverage

· "5.0": The drinking sensation suitable for a beer-taste beverage is very strongly perceived.
· "4.0": The drinking sensation suitable for a beer-taste beverage is strongly perceived.
· "3.0": The drinking sensation suitable for a beer-taste beverage is sufficiently perceived.
· "2.0": The drinking sensation is hardly perceived.
· "1.0": The drinking sensation is not perceived at all.

[Table 2]

Table 2

|  |  | Example 11 | Example 12 | Example 13 | Example 14 | Example 15 | Example 16 | Example 17 |
|---|---|---|---|---|---|---|---|---|
| Alcohol content | (v/v)% | 18.0 | 18.0 | 18.0 | 18.0 | 18.0 | 18.0 | 18.0 |
| Real extract concentration | (w/w)% | 16.0 | 16.0 | 16.0 | 16.0 | 16.0 | 16.0 | 16.0 |
| Protein content | mg/mL | 1.0 | 5.0 | 10.0 | 15.0 | 20.0 | 25.0 | 30.0 |

(continued)

| | Example 11 | Example 12 | Example 13 | Example 14 | Example 15 | Example 16 | Example 17 |
|---|---|---|---|---|---|---|---|
| Real extract concentration/alcohol content | 0.89 | 0.89 | 0.89 | 0.89 | 0.89 | 0.89 | 0.89 |
| Protein content/alcohol content | 0.056 | 0.28 | 0.56 | 0.83 | 1.1 | 1.4 | 1.7 |
| Protein content/real extract concentration | 0.063 | 0.31 | 0.63 | 0.94 | 1.3 | 1.6 | 1.9 |
| Presence or absence of addition of spirits | - | Present | Present | Present | Absent | Absent | Absent | Absent |
| Presence or absence of addition of collagen | - | Absent | Absent | Absent | Absent | Present | Present | Present |
| Presence or absence of drinking sensation | 3.00 | 3.25 | 3.75 | 4.75 | 4.75 | 4.50 | 4.25 |

From Table 2, the beer-taste beverages prepared in Examples 11 to 17 resulted in having drinking sensation suitable for a beer-taste beverage. In addition, each of these beer-taste beverages was a high-alcohol beer-taste beverage having suppressed unsuitable bitterness and a desirable body.

## Claims

1. A beer-taste beverage, comprising

   an alcohol content of greater than or equal to 10.0 (v/v)%, and
   a real extract concentration of greater than or equal to 11.8 (w/w)%.

2. The beer-taste beverage according to claim 1, wherein a protein content is greater than or equal to 1.0 mg/mL.

3. The beer-taste beverage according to claim 1 or 2, wherein [the real extract concentration/the alcohol content], a ratio of the real extract concentration (unit: (w/w)%) to the alcohol content (unit: (v/v)%), is greater than or equal to 0.10 and less than or equal to 5.00.

4. The beer-taste beverage according to claim 1 or 2, wherein the alcohol content is greater than or equal to 15.0 (v/v)% and less than or equal to 30.0 (v/v)%.

5. The beer-taste beverage according to claim 1 or 2, wherein the real extract concentration is greater than or equal to 14.0 (w/w)% and less than or equal to 25.0 (w/w)%.

6. The beer-taste beverage according to claim 1 or 2, wherein [a protein content/the alcohol content], a ratio of a protein content (unit: mg/mL) to the alcohol content (unit: (v/v)%), is greater than or equal to 0.050 and less than or equal to 5.0.

7. The beer-taste beverage according to claim 1 or 2, wherein [a protein content/the real extract concentration], a ratio of a protein content (unit: mg/mL) to the real extract concentration (unit: (w/w)%), is greater than or equal to 0.050 and less than or equal to 5.0.

8. A method for producing a beer-taste beverage, the method comprising at least the following steps (a) and (b):

   · step (a): adjusting an alcohol content of the beer-taste beverage to greater than or equal to 10.0 (v/v)%; and

· step (b): adjusting a real extract concentration of the beer-taste beverage to greater than or equal to 11.8 (w/w)%.

## INTERNATIONAL SEARCH REPORT

| | International application No. |
|---|---|
| | **PCT/JP2023/045604** |

| | |
|---|---|
| **A.** | **CLASSIFICATION OF SUBJECT MATTER** |

*C12G 3/04*(2019.01)i; *C12C 5/02*(2006.01)i; *C12C 11/00*(2006.01)i; *C12C 12/00*(2006.01)i; *C12G 3/021*(2019.01)i
FI: C12G3/04; C12C5/02; C12C11/00 A; C12C12/00; C12G3/021

According to International Patent Classification (IPC) or to both national classification and IPC

| | |
|---|---|
| **B.** | **FIELDS SEARCHED** |

Minimum documentation searched (classification system followed by classification symbols)

C12G; C12C

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

Mintel GNPD

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2020-103270 A (SUNTORY HOLDINGS LTD.) 09 July 2020 (2020-07-09) claims, paragraphs [0012], [0020], [0024], [0033], examples | 1-8 |
| A | CN 110628538 A (BEIBU GULF UNIVERSITY) 31 December 2019 (2019-12-31) examples | 1-8 |
| A | JP 2016-174571 A (KIRIN COMPANY, LIMITED) 06 October 2016 (2016-10-06) paragraphs [0048], [0049] | 1-8 |
| A | JP 7163528 B1 (SUNTORY HOLDINGS LTD.) 31 October 2022 (2022-10-31) paragraph [0051] | 1-8 |
| A | Barley Wine Beer (ID#6501051). Mintel GNPD [online]. April 2019, https://www.gnpd.com, [retrieved on 06 March 2024] product details, nutrition label | 1-8 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2023/045604**

### C. DOCUMENTS CONSIDERED TO BE RELEVANT

| Category* | Citation of document, with indication, where appropriate, of the relevant passages | Relevant to claim No. |
|---|---|---|
| A | Scottish Stout (ID#1732516). Mintel GNPD [online]. February 2012, https://www.gnpd.com, [retrieved on 06 March 2024]<br>product details, nutrition label | 1-8 |
| A | Brewers Association 2020 Beer Style Guidelines. 21 February 2020<br>entire text | 1-8 |
| P, A | JP 7312237 B1 (SUNTORY HOLDINGS LTD.) 20 July 2023 (2023-07-20)<br>claims | 1-8 |

Form PCT/ISA/210 (second sheet) (July 2022)

23

**INTERNATIONAL SEARCH REPORT**
Information on patent family members

International application No.

**PCT/JP2023/045604**

| Patent document cited in search report | | | Publication date (day/month/year) | Patent family member(s) | | Publication date (day/month/year) |
|---|---|---|---|---|---|---|
| JP | 2020-103270 | A | 09 July 2020 | (Family: none) | | |
| CN | 110628538 | A | 31 December 2019 | (Family: none) | | |
| JP | 2016-174571 | A | 06 October 2016 | (Family: none) | | |
| JP | 7163528 | B1 | 31 October 2022 | WO 2023/233680 A1 paragraph [0051] | | |
| JP | 7312237 | B1 | 20 July 2023 | WO 2023/127711 A1 claims | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021159020 A

**Non-patent literature cited in the description**

- Revised BCOJ Beer Analysis Method, Enlarged and Revised. Public Interest Incorporated Foundation, The Brewing Society of Japan, 2013
- Revised BCOJ Beer Analysis Method. Public Interest Incorporated Foundation, The Brewing Society of Japan, 2013
- 8.15 Bitterness Unit. Revised BCOJ Beer Analysis Method. Public Interest Incorporated Foundation, The Brewing Society of Japan, 2013
- BCOJ Beer Analysis Method. The Brewing Society of Japan, 01 November 2004
- 8.8 Chromaticity. Revised BCOJ Beer Analysis Method. Public Interest Incorporated Foundation, The Brewing Society of Japan, 2013
- Modification and Homogeneity (Calcofluor Carlsberg Method - EBC). MEBAK Raw Materials Barley Adjuncts Malt Hops And Hop Products. Chairman Dr. Fritz Jacob, 2011